# EUROPEAN PATENT APPLICATION

(11) **EP 4 621 699 A1**
(43) Date of publication of application: **24.09.2025**
(21) Application number: 23891833.8
(22) Date of filing: 18.10.2023
(51) Int. Cl.: G06Q 50/06, C01B 3/34, F17C 5/06, B01D 53/14, G06Q 10/08

(54) **CLEAN ENERGY CONVERGENCE CENTER USING BLUE AND GREEN HYDROGEN**

(30) Priority: 17.11.2022 KR 20220154759
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2023/016154
(87) International publication number: WO 2024/106766

(57) **Abstract**

The present invention relates to a clean energy convergence center using blue and green hydrogen. According to an embodiment of the present invention, the clean energy convergence center comprises: a clean hydrogen production base for producing blue and green hydrogen through the capture, storage, and recycling of carbon dioxide generated during methane reforming; and at least one clean hydrogen node that is supplied with the blue and green hydrogen produced from the clean hydrogen production base. The clean hydrogen nodes are distributed in large numbers throughout the country in consideration of factors including the area and population of each of regions and the distance to the clean hydrogen production base. The clean hydrogen production base and the clean hydrogen nodes are connected, and infrastructure including logistics, rest facilities, offices, and restaurants is expanded around each of the distributed clean hydrogen nodes.

## Description

### Technical Field

The present disclosure relates generally to a clean energy convergence center using blue and green hydrogen. More particularly, the present disclosure relates to a clean energy convergence center that produces blue hydrogen and green hydrogen in a complex manner by reforming natural gas including shale gas, transports the blue hydrogen and the green hydrogen to clean hydrogen nodes throughout a country using hydrogen trucks, and operates logistics, stores, and rest facilities based on the blue hydrogen and the green hydrogen at each hydrogen charging station.

### Background Art

In recent years, as a climate change has emerged as a global issue, each country has taken active actions in response to climate change. The world's major countries are adopting various policies to reduce greenhouse gas emissions. Since the Kyoto Protocol officially came into force, Korea has also been committed to reduce its greenhouse gas emissions. However, greenhouse gas levels have continued to rise globally, with no sign of reversal.

In this situation, with concerns about global warming and depletion of fossil fuels, the demand for the research and development of alternative energy sources is increasing continuously. Among them, hydrogen energy is gaining attention as the only viable alternative to solve environmental and energy problems.

Hydrogen is an essential chemical used in energy, refining, fine chemical, and petrochemical processes. Typically, it is used in many refinery processes. At present, the world is transitioning from a fossil fuel-based economy to a hydrogen economy, so there is an increased interest in developing a technology for small fuel cell reformers, hydrogen stations for fuel cell vehicles, and chemical plants for large-scale hydrogen production.

As a representative method of producing hydrogen, water electrolysis, which produces hydrogen from pure water using electric energy, has emerged as a promising technology.

Conventional water electrolysis generally includes an external power source, an anode, and a cathode. When electricity is applied from the external power source, oxygen (O₂) is generated at the anode through oxidation, and hydrogen (H₂) is generated at the cathode through reduction. In other words, such conventional water electrolysis can refer to the process of electrically decomposing water into hydrogen and oxygen.

At the cathode in the conventional water electrolysis system, OH-radicals are generated as reactants during the reduction process. However, the OH-radicals are highly likely to recombine with oxygen (O₂) generated through oxidation at the anode and hydrogen (H₂) generated through reduction at the cathode, thereby generating water (H₂O). This results in a problem of deteriorating efficiency of hydrogen (H₂) generation.

Meanwhile, in terms of economic feasibility of hydrogen production, steam reforming has been developed and commercially available. Steam reforming represents a method in which water gas is generated by reforming natural gas containing hydrocarbons such as methane under high-temperature and high-pressure steam conditions, and the resulting water gas is then subjected to a pressure swing adsorption (PSA) process to separate and produce hydrogen.

However, carbon dioxide generated together with hydrogen during the PSA process is emitted into the atmosphere (commonly referred to as "grey hydrogen"), so there is a limit to reducing greenhouse gas emissions.

Thus, "blue hydrogen" technology, which captures and removes carbon dioxide produced during hydrogen production to reduce its release into the atmosphere, or "green hydrogen" technology, which produces no carbon dioxide, has recently been proposed as a practical solution for reducing greenhouse gas emissions.

### Disclosure

### Technical Problem

Accordingly, the present disclosure has been made keeping in mind the above problems occurring in the related art, and an objective of the present disclosure is to provide a clean energy convergence center that produces blue hydrogen and green hydrogen in a complex manner by reforming natural gas including shale gas, transports the blue hydrogen and the green hydrogen to clean hydrogen nodes throughout a country using hydrogen trucks, and operates logistics, stores, and rest facilities based on the blue hydrogen and the green hydrogen at each hydrogen charging station.

Additionally, another objective of the present disclosure is to provide a clean energy convergence center using blue and green hydrogen, the clean energy convergence center being capable of removing carbon dioxide and recycling the carbon dioxide into other useful materials at the same time by capturing carbon dioxide in water gas using a basic alkaline mixture and converting the captured carbon dioxide into a carbon resource.

Additionally, still another objective of the present disclosure is to provide a clean energy convergence center using blue and green hydrogen, the clean energy convergence center being capable of generating hydrogen using a carbon dioxide reactant converted into a carbon resource and supplying the generated hydrogen again to a fuel cell to produce electric energy, thereby maximizing utilization of carbon dioxide compared to conventional technologies while improving efficiency of blue and green hydrogen production.

Additionally, yet another objective of the present disclosure is to provide a clean energy convergence center using blue and green hydrogen, the clean energy convergence center being capable of producing more green hydrogen than conventional water electrolysis technology by using an electrolyte from a carbon dioxide reactant converted into a carbon resource.

Additionally, yet another objective of the present disclosure is to provide a clean energy convergence center using blue and green hydrogen, the clean energy convergence center being capable of: installing on-site and clean hydrogen nodes throughout a country, thereby enabling construction of industrial infrastructure such as industrial complexes in isolated areas away from production bases and densely populated areas across the country; and utilizing each on-site and clean hydrogen node as an eco-friendly vehicle station for industrial or residential use or as a local small-scale power generation source, thereby drastically reducing carbon dioxide emissions, and establishing a new eco-friendly hydrogen transportation system instead of an existing transportation system such as diesel or gasoline that causes environmental pollution.

The objectives of the present disclosure are not limited to those mentioned above, and other objectives not mentioned will be clearly understood by those skilled in the art from the description provided hereinafter.

### Technical Solution

In order to accomplish the above objectives, according to an aspect of the present disclosure, there is provided a clean energy convergence center using blue and green hydrogen, the clean energy convergence center including: a clean hydrogen production base that produces blue and green hydrogen through capturing, storing, and recycling carbon dioxide generated during methane reforming; and at least one clean hydrogen node that receives the blue and green hydrogen produced from the clean hydrogen production base, wherein multiple clean hydrogen nodes may be distributed throughout a country in consideration of factors including an area and population of each region of the country and a distance to the clean hydrogen production base, the clean hydrogen production base and the clean hydrogen nodes may be connected to each other, and infrastructure including logistics, rest facilities, offices, and restaurants may be expanded around each of the distributed clean hydrogen nodes.

According to an embodiment, the clean hydrogen production base may include: a natural gas reservoir that stores liquefied natural gas (LNG) including shale gas; a hydrocarbon reformer that generates a gas mixture containing first hydrogen (blue hydrogen) and carbon dioxide by reacting the natural gas or shale gas supplied from the natural gas reservoir with water supplied from outside; an on-site hydrogen charging station that receives and stores the first hydrogen generated from the hydrocarbon reformer; a reactor that receives the carbon dioxide generated from the hydrocarbon reformer, reacts the carbon dioxide with a basic alkaline mixture to capture the carbon dioxide, collects a reactant containing the captured carbon dioxide, and separates a carbon dioxide reactant and a waste solution from the reactant; a carbon resource reservoir that stores the carbon dioxide reactant separated from the reactor; and a hydrogen generator that generates second hydrogen (green hydrogen) by directly receiving the carbon dioxide reactant separated from the reactor or using the carbon dioxide reactant delivered via the carbon resource reservoir and delivers the generated second hydrogen to the on-site hydrogen charging station.

According to an embodiment, the clean hydrogen node may include: an off-site hydrogen charging station that receives and stores the first and second hydrogen from the on-site hydrogen charging station.

According to an embodiment, the gas mixture containing the first hydrogen and the carbon dioxide may be generated by reacting raw gas stored in the natural gas reservoir with the water supplied from outside, the first hydrogen may be separated from the gas mixture, and the first hydrogen may be delivered to the on-site hydrogen charging station through a first transport pipe.

According to an embodiment, the carbon resource reservoir may receive and store the reactant containing the carbon dioxide captured by the reactor or supplies the reactant to the hydrogen generator to generate second hydrogen and then deliver the second hydrogen to the on-site hydrogen charging station through a second transport pipe.

According to an embodiment, the first and second hydrogen delivered to the on-site hydrogen charging station may be transported by land to the clean hydrogen node using a hydrogen transport truck equipped with a hydrogen storage tank of a predetermined capacity or transported through a transport pipeline.

According to an embodiment, the clean hydrogen production base or the clean hydrogen node may further include: a fuel cell that generates electricity using the generated blue and green hydrogen; and an energy storage system (ESS) that stores the electricity generated from the fuel cell.

According to an embodiment, the hydrogen transport truck may be a hydrogen electric vehicle that runs on land by generating electricity from a fuel cell inside the vehicle using the first or second hydrogen charged from the on-site hydrogen charging station.

According to an embodiment, the hydrocarbon reformer may include: an extraction means that extracts or separates the hydrogen and the carbon dioxide from the gas mixture; and a delivery means that supplies the hydrogen extracted from the extraction means to the on-site hydrogen charging station and supplies the carbon dioxide separated from the hydrogen from the generated gas mixture to the reactor.

According to an embodiment, the reactor may include: a mixer that supplies the basic alkaline mixture; an absorption tower that reacts the basic alkaline mixture supplied from the mixer with the carbon dioxide delivered from the hydrocarbon reformer to capture the carbon dioxide; a separator that collects the reactant containing the carbon dioxide captured by the absorption tower and separates the carbon dioxide reactant and the waste solution from the reactant; and a carbon resource reservoir that stores the separated carbon dioxide reactant to be used as a resource.

According to an embodiment, the mixer may mix a basic alkaline solution supplied from a basic alkaline solution storage tank and water supplied from a water source to generate the basic alkaline mixture.

According to an embodiment, the absorption tower may supply the basic alkaline mixture from the mixer through multiple nozzles installed at a top of the absorption tower.

According to an embodiment, the absorption tower may allow the carbon dioxide delivered from the hydrocarbon reformer to pass through a bubbler installed at a bottom of the absorption tower to form microbubbles in the carbon dioxide, and react the carbon dioxide with the basic alkaline mixture supplied from the mixer to capture the carbon dioxide.

According to an embodiment, the reactor may further include: a monitoring unit that monitors a water level and a pH of the basic alkaline mixture in the absorption tower; and a control unit that controls a supply amount of the basic alkaline mixture by the monitoring unit.

According to an embodiment, the carbon resource reservoir may include: a storage tank having a double-wall structure with an inner wall and an outer wall to contain the carbon dioxide reactant separated from the reactor; an inlet unit connected to the storage tank to load the carbon dioxide reactant into the storage tank; an outlet unit connected to the storage tank to unload the carbon dioxide reactant in the storage tank; and a control unit that controls the inlet unit or the outlet unit during loading/unloading of the carbon dioxide reactant.

### Advantageous Effects

According to the present disclosure, logistics facilities can be additionally expanded and installed around an off-site hydrogen charging station. These logistics facilities enable transportation using hydrogen trucks, thereby drastically reducing carbon dioxide emissions.

Additionally, the off-site hydrogen charging station can produce electricity using hydrogen, thereby enabling electricity supply to areas with poor infrastructure. This electricity can be supplied and utilized in buildings such as restaurants, rest facilities, and offices, and it is advantageous over electricity produced by conventional power plants in terms of producing environmentally friendly clean energy without emitting harmful byproducts.

According to the present disclosure, carbon dioxide generated after reforming natural gas including shale gas can be captured and converted into a carbon resource. Thereby, carbon dioxide can be removed during reforming of raw gas while producing high-purity blue hydrogen, and the removed carbon dioxide can be used to produce sodium carbonate or sodium bicarbonate, which are other useful substances.

Additionally, according to the present disclosure, blue hydrogen can be produced again by utilizing a carbon dioxide reactant converted into a carbon resource.

Additionally, according to the present disclosure, more hydrogen can be produced compared to conventional general water electrolysis technology by utilizing the carbon dioxide reactant converted into the carbon resource as an electrolyte, and at the same time, oxygen, which is a useful resource, can also be produced.

Additionally, according to the present disclosure, on-site and clean hydrogen nodes can be installed throughout a country, thereby enabling construction of industrial infrastructure such as industrial complexes in isolated areas away from production bases and densely populated areas across the country.

Additionally, according to the present disclosure, each on-site and clean hydrogen node can be utilized as an eco-friendly vehicle station for industrial or residential use or as a local small-scale power generation source, thereby drastically reducing carbon dioxide emissions, and establishing a new eco-friendly hydrogen transportation system instead of an existing transportation system such as diesel or gasoline that causes environmental pollution.

### Description of Drawings

FIG. 1 is a conceptual diagram schematically illustrating a clean energy convergence center using blue and green hydrogen according to an embodiment of the present disclosure.
FIG. 2a and FIG. 2b are respectively a conceptual diagram and a schematic diagram illustrating a clean hydrogen node according to an embodiment of the present disclosure.
FIG. 3 is a conceptual diagram illustrating a reactor according to an embodiment of the present disclosure.
FIG. 4 is a conceptual diagram illustrating a hydrogen generator according to an embodiment of the present disclosure.
FIG. 5 is an enlarged view of part B of FIG. 4.
FIG. 6 is an enlarged view of part A of FIG. 4.
FIG. 7 is a view illustrating a carbon resource reservoir according to a first embodiment of the present disclosure.
FIG. 8 is a view illustrating a carbon dioxide capture reactant storage system according to a second embodiment of the present disclosure.
FIG. 9 is a view illustrating general underground temperature distribution according to depth from the ground.
FIG. 10 is a flowchart illustrating a method of operating the clean energy convergence center using blue and green hydrogen according to an embodiment of the present disclosure.

### Best Mode

Reference will now be made in detail to various embodiments of the present disclosure, specific examples of which are illustrated in the accompanying drawings and described below, since the embodiments of the present disclosure can be variously modified in many different forms.

However, it is to be understood that the present disclosure is not limited to those exemplary embodiments, but include various alternatives, modifications, equivalents that may be included within the spirit and scope of the present disclosure as defined by the appended claims.

It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

Hereinafter, a clean energy convergence center using blue and green hydrogen according to an embodiment of the present disclosure will be described in more detail with reference to the accompanying drawings.

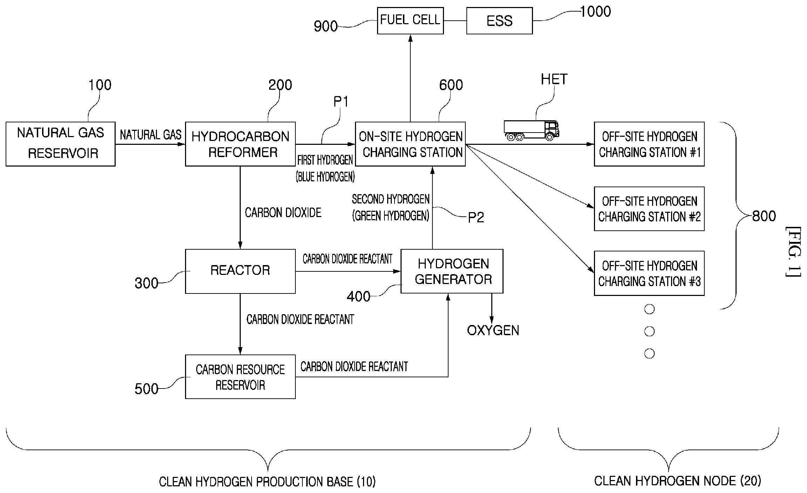

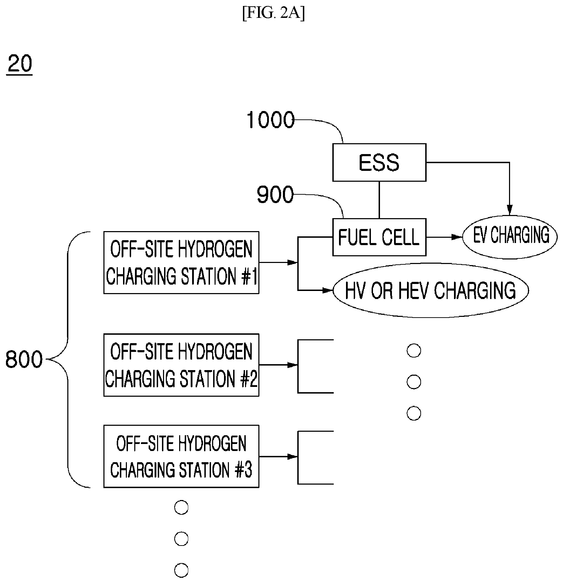

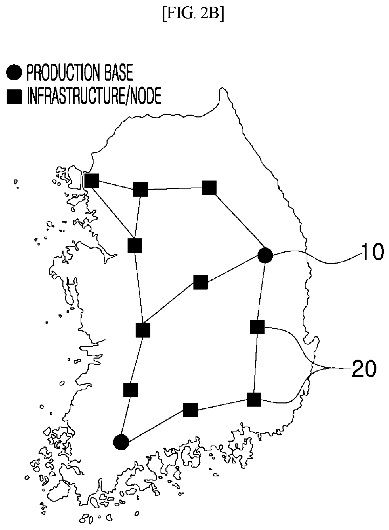

FIG. 1 is a conceptual diagram schematically illustrating a clean energy convergence center using blue and green hydrogen according to an embodiment of the present disclosure. FIG. 2a and FIG. 2b are respectively a conceptual diagram and a schematic diagram illustrating a clean hydrogen node 20 according to an embodiment of the present disclosure.

The present disclosure provides a clean energy convergence center that produces blue hydrogen and green hydrogen in a complex manner by reforming natural gas including shale gas, transports the blue hydrogen and the green hydrogen to clean hydrogen nodes throughout a country using hydrogen trucks or transport pipelines, and operates logistics, stores, and rest facilities based on the blue hydrogen and the green hydrogen at each clean hydrogen node.

According to an embodiment, the clean energy convergence center using blue and green hydrogen according to the present disclosure may include: a clean hydrogen production base 10 that produces blue and green hydrogen through capturing, storing, and recycling carbon dioxide generated during methane reforming; and at least one clean hydrogen node 20 that receives the blue and green hydrogen produced from the clean hydrogen production base 10.

Here, the term "clean hydrogen" refers to clean hydrogen including blue and green hydrogen.

Additionally, multiple clean hydrogen nodes 20 are distributed throughout a country in consideration of factors including the area and population of each region of the country and the distance to the clean hydrogen production base 10. The clean hydrogen production base 10 and the clean hydrogen nodes 20 are connected to each other.

Additionally, infrastructure including logistics, rest facilities, offices, and restaurants is expanded around each of the distributed clean hydrogen nodes 20.

By expanding the infrastructure including an off-site hydrogen charging station 800 and logistics, rest facilities, offices, and restaurants around the clean hydrogen node 20, it is possible to effectively expand infrastructure for transportation and logistics in regional industrial bases such as industrial complexes located in infrastructure-vulnerable areas across a country.

First, the clean hydrogen production base 10 according to an embodiment of the present disclosure is provided with a natural gas reservoir 100 that stores liquefied natural gas (LNG) including shale gas.

Additionally, a hydrocarbon reformer 200 is provided to generate a gas mixture containing hydrogen and carbon dioxide by reacting the natural gas or shale gas supplied from the natural gas reservoir 100 with water supplied from the outside.

Additionally, an on-site hydrogen charging station 600 is provided to receive and store first hydrogen (blue hydrogen) generated from the hydrocarbon reformer 200.

That is, the hydrocarbon reformer 200 reacts raw gas stored in the natural gas reservoir 100 with water supplied from the outside to generate a gas mixture containing first hydrogen (blue hydrogen) and carbon dioxide, separates the first hydrogen from the gas mixture, and delivers the first hydrogen to the on-site hydrogen charging station 600 by pipeline transport through a first transport pipe P1. Here, the on-site hydrogen charging station refers to a hydrogen charging station installed in each region as a production base for complex production, storage, and charging of blue hydrogen and green hydrogen.

Additionally, a reactor 300 is provided to receive the carbon dioxide generated from the hydrocarbon reformer 200, reacts the carbon dioxide with a basic alkaline mixture to capture the carbon dioxide, collects a reactant containing the captured carbon dioxide, and separates a carbon dioxide reactant and a waste solution from the reactant.

The reactor 300 receives the carbon dioxide generated from the hydrocarbon reformer 200, reacts the carbon dioxide with the basic alkaline mixture to capture the carbon dioxide, and collects the reactant containing the captured carbon dioxide.

Additionally, a carbon resource reservoir 500 is provided to store the carbon dioxide reactant separated from the reactor 300.

The carbon resource reservoir 500 receives and stores the reactant containing the carbon dioxide captured by the reactor 300 or supplies the reactant to a hydrogen generator 400, which will be described later, to generate second hydrogen (green hydrogen) and then delivers the second hydrogen to the on-site hydrogen charging station 600 through a second transport pipe P2.

Meanwhile, the clean hydrogen node 20 includes an off-site hydrogen charging station 800 that receives the first and second hydrogen (blue and green hydrogen) produced at the clean hydrogen production base 10 and stored at the on-site hydrogen charging station 600 and stores the first and second hydrogen at each regional base throughout a country.

The off-site hydrogen charging station 800 refers to a hydrogen charging station as an infrastructure/node that does not have a hydrogen production facility and is used to store and charge the first and second hydrogen (blue and green hydrogen) transported from the on-site hydrogen charging station 600 by land or other routes. For example, the off-site hydrogen charging station may be installed at each regional base at a predetermined distance throughout a country around one wide-area on-site hydrogen charging station 600.

Additionally, the hydrogen generator 400 is provided to generate the second hydrogen (green hydrogen) by directly receiving the carbon dioxide reactant separated from the reactor 300 or using the carbon dioxide reactant delivered via the carbon resource reservoir 500, and delivers the generated second hydrogen to the on-site hydrogen charging station 600.

The hydrogen generator 400 generates the second hydrogen (green hydrogen) using the reactant containing the carbon dioxide captured by the reactor 300 and then delivers the second hydrogen to the on-site hydrogen charging station 600 through the second transport pipe P2.

The first hydrogen (blue hydrogen) and the second hydrogen (green hydrogen) delivered to the on-site hydrogen charging station 600 are transported by land to the off-site hydrogen charging station 800 distributed in each regional base across a country using a hydrogen transport truck (HET) equipped with a hydrogen storage tank (not illustrated) of a predetermined capacity.

At this time, the on-site hydrogen charging station 600 or the off-site hydrogen charging station 800 may be further provided with a fuel cell 900 that generates electricity using the generated first hydrogen (blue hydrogen) and second hydrogen (green hydrogen) and an energy storage system (ESS) 1000 that stores the electricity generated from the fuel cell 900.

Accordingly, an electric vehicle (EV) is directly charged using the electric energy produced by the fuel cell 900 or the electric vehicle (EV) is indirectly charged using the electric energy stored in the ESS 1000. Meanwhile, hydrogen is charged to a hydrogen vehicle (HV) or a hydrogen electric vehicle (HEV) through the on-site hydrogen charging station 600 or the off-site hydrogen charging station 800.

Here, it is stated that transportation of the first hydrogen (blue hydrogen) and the second hydrogen (green hydrogen) from the on-site hydrogen charging station 600 to the off-site hydrogen charging station 800 is not limited to land transportation using a hydrogen transport truck (HET), and for example, maritime transportation using a ship or long-distance pipeline transport using a hydrogen transport pipeline is also possible.

The hydrogen transport truck (HET) may be a hydrogen electric vehicle (HEV) that runs on land by generating electricity from a fuel cell inside the vehicle using the first hydrogen (blue hydrogen) or the second hydrogen (green hydrogen) charged from the on-site hydrogen charging station 600 or the off-site hydrogen charging station 800.

Meanwhile, referring to FIG. 2b, an off-site hydrogen charging station 800 for each clean hydrogen node 20 according to the present disclosure may be installed as a hydrogen charging infrastructure/node at each regional base at a predetermined distance in cities or along roads throughout a country.

That is, the off-site hydrogen charging station 800 may be installed regionally, like gas stations or LPG gas charging stations located throughout a country. This enables electric energy or hydrogen to be charged to all types of eco-friendly vehicles, such as an electric vehicle (EV), a hydrogen vehicle (HV), and a hydrogen electric vehicle (HEV), through the off-site hydrogen charging station 800 installed at each regional base at a predetermined distance.

Additionally, the on-site hydrogen charging station 600 as a production base that supplies hydrogen to the off-site hydrogen charging station 800 may be installed in a predetermined number at a location where complex production of blue hydrogen and green hydrogen, carbon dioxide capture, carbon recycling and reactant storage, and land transport of blue hydrogen or green hydrogen gas to the off-site hydrogen charging station 800 are easy.

Moreover, logistics facilities may be additionally expanded and installed around the off-site hydrogen charging station 800. These logistics facilities enable transportation using hydrogen trucks, thereby drastically reducing carbon dioxide emissions.

Additionally, since the off-site hydrogen charging station 800 produces electricity using hydrogen, it is possible to supply electricity even to areas with poor infrastructure. This electricity can be supplied and utilized in buildings such as restaurants, rest facilities, and offices, and it is advantageous over electricity produced by conventional power plants in terms of producing environmentally friendly clean energy without emitting harmful byproducts.

Referring to FIG. 2, specifically, a system for implementing the clean energy convergence center using blue and green hydrogen according to an embodiment of the present disclosure includes at least one clean hydrogen production base 10 and clean hydrogen node 20 installed throughout a country.

More specifically, the clean hydrogen production base 10 and clean hydrogen node 20 may include a natural gas reservoir 100, a hydrocarbon reformer 200, a reactor 300, a hydrogen generator 400, a carbon resource reservoir 500, an on-site hydrogen charging station 600, a hydrogen transport truck (HET), an off-site hydrogen charging station 800, a fuel cell 900, and an energy storage system (ESS) 1000 (see FIG. 1).

First, the natural gas reservoir 100 stores liquefied natural gas (LNG) including shale gas. In particular, shale gas is a large amount of natural gas found in underground shale layers on land or offshore, and is usually transported to a consumer or storage location through a pipeline connected to a borehole. Due to its abundant reserves, shale gas is attracting attention as a next-generation clean energy source compared to other natural gases with low economic feasibility. Therefore, the present disclosure proposes a method for mass producing blue hydrogen that does not emit carbon dioxide by actively utilizing such shale gas.

The hydrocarbon reformer 200 reacts hydrocarbon, i.e., liquid fuel containing the hydrocarbon, supplied from the natural gas reservoir 100 to produce a gas mixture containing hydrogen and carbon dioxide.

Specifically, as shown in <Reaction Equation 1> below, the hydrocarbon reformer 200 may react hydrocarbon and water vapor to produce a gas mixture containing hydrogen (first hydrogen; blue hydrogen) and carbon dioxide.

<Reaction Equation 1> CH₄+2H₂O → CO₂ + 4H₂

The chemical reaction described above produces hydrogen and carbon dioxide in a 4:1 ratio in terms of material quantity, but emits 5 to 10 tons of carbon dioxide per ton of hydrogen produced during a natural gas reforming process. That is, since an amount of carbon dioxide produced is greater than that of hydrogen produced by the above chemical reaction, a method for reducing the carbon dioxide is needed.

For this purpose, the hydrocarbon reformer 200 may include an extraction means for extracting or separating the hydrogen (first hydrogen; blue hydrogen) and the carbon dioxide from the gas mixture, and a delivery means for supplying the hydrogen extracted from the extraction means to the on-site hydrogen charging station 600 and supplying the carbon dioxide separated from hydrogen from the generated gas mixture to the reactor 300.

The reactor 300 is connected to the hydrocarbon reformer 200, receives carbon dioxide generated from the hydrocarbon reformer 200, reacts the carbon dioxide with a basic alkaline mixture to capture the carbon dioxide, collects a reactant containing the captured carbon dioxide, and separates a carbon dioxide reactant and a waste solution from the reactant, thereby capturing the carbon dioxide and converting the carbon dioxide into a carbon resource.

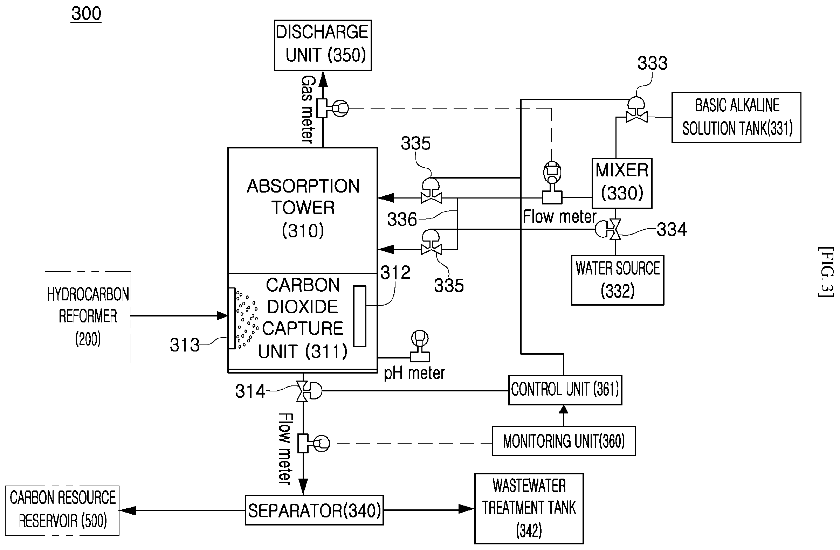

To this end, as illustrated in FIG. 3, a reactor 300 according to an embodiment of the present disclosure is a system that captures carbon dioxide supplied from the hydrocarbon reformer 200 using a basic alkaline solution, and may include an absorption tower 310, a carbon dioxide capture unit 311, a mixer 330, a separator 340, and a discharge unit 350.

The absorption tower 310 may refer to a facility, building, or equipment that captures carbon dioxide. Additionally, the carbon dioxide capture unit 311 located at the bottom of the absorption tower 310 is a part of the absorption tower 310, and may refer to a part that captures carbon dioxide by bubbling exhaust gas.

The absorption tower 310 is provided at the bottom thereof with the carbon dioxide capture unit 311 where carbon dioxide is captured, and reacts a basic alkaline mixture with carbon dioxide (carbon dioxide microbubbles) to capture the carbon dioxide.

The absorption tower 310 includes a nozzle at the top. The basic alkaline mixture is sprayed into the absorption tower 310 through the nozzle from the mixer 330 and collected in the carbon dioxide capture unit 311 at the bottom of the absorption tower.

At the same time that the basic alkaline mixture is sprayed, the carbon dioxide supplied from the hydrocarbon reformer 200 passes through a bubbler 313 in the carbon dioxide capture unit 311 at the bottom of the absorption tower 310, and the carbon dioxide in which microbubbles are formed is supplied. The basic alkaline mixture and the carbon dioxide microbubbles react in the carbon dioxide capture unit 311 to capture the carbon dioxide. When the carbon dioxide is reacted with the basic alkaline mixture, the microbubbles are formed as the carbon dioxide passes through the bubbler 313 having microscopic holes formed at an outlet of the hydrocarbon reformer 200.

The bubbler 313 allows the carbon dioxide supplied from the hydrocarbon reformer 200 to pass therethrough to form microbubbles in the carbon dioxide. As a bubble size of the microbubbles decreases, a reaction area between the carbon dioxide and an alkaline solution increases, thereby increasing carbon dioxide capture ability. For example, the microbubbles may refer to bubbles with a size of about equal to or less than 50 µm existing in an aqueous solution.

Additionally, the absorption tower 310 may include a level indicator 312 therein that detects a water level of the solution inside the absorption tower 310.

The nozzle may include multiple nozzles. The nozzles may be formed in one or more stages. The nozzle is connected to the mixer 330 to supply the basic alkaline mixture from the mixer 330.

The absorption tower 310 may be configured in series, parallel, or a combination of series and parallel.

For example, the absorption tower 310 may be arranged in series when a flow velocity of exhaust gas is fast. When the flow velocity is fast and unreacted carbon dioxide is discharged from the absorption tower, absorption tower may be installed in series to capture the unreacted carbon dioxide.

Additionally, for example, the absorption tower 310 may be arranged in parallel when a flow rate of exhaust gas is large. When the flow rate of exhaust gas exceeds an amount that the absorption tower can capture, the absorption tower may be arranged in parallel to increase an amount of carbon dioxide that can be captured.

The mixer 330 mixes a basic alkaline solution supplied from a basic alkaline solution tank 331 and water supplied from a water source 332, and supplies the mixture to the nozzle of the absorption tower 310.

The basic alkaline mixture containing the basic alkaline solution and the water is supplied using a separately connected by-pass line 336 when a supply or required amount of the basic alkaline mixture increases.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

As a mixing ratio of the basic alkaline solution increases among the basic alkaline solution and the water, a carbon dioxide capture rate may increase. However, a mixing ratio of the water may be adjusted in consideration of cost aspects.

The basic alkaline mixture may include: at least one oxide selected from the group consisting of SiO₂, Al₂O₃, Fe₂O₃, TiO₂, MgO, MnO, CaO, Na₂O, K₂O, and P₂O₃; at least one metal selected from the group consisting of Li, Cr, Co, Ni, Cu, Zn, Ga, Sr, Cd, and Pb; a crystallized synthetic zeolite produced from an alumina-based raw material, a silica-based raw material, and sodium hydroxide; and at least one liquid composition selected from the group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water source 332 may include all water that is readily obtainable at a system installation site, and may be, for example, seawater.

The basic alkaline mixture may have an average pH of equal to or greater than pH 12. For example, the pH may be pH 12 to pH 13.5, pH 13, pH 12, pH 12.1, pH 12.2, or pH 12.3. The pH of the basic alkaline mixture is measured by a pH meter inside the absorption tower 310. When the pH of the basic alkaline mixture inside the absorption tower 310 is less than 10.5, carbon dioxide capture may no longer be performed. Therefore, in order to adjust the pH of the basic alkaline mixture, amounts of the basic alkaline solution and the water may be adjusted from 0% to 100% through valves 333 and 334, respectively, and supplied to the mixer 330.

When a water level of the basic alkaline mixture in the absorption tower 310 falls to less than 90% (measured by a level indicator), the basic alkaline mixture may be injected through a valve 335 from the mixer 330. When the water level of the mixture reaches 100%, the injection may be stopped. At the same time, the basic alkaline solution may be mixed with the water until the pH of the basic alkaline mixture becomes 12 to 13.5.

Since an amount of the basic alkaline mixture supplied to the absorption tower 310 and an amount of the solution exiting the separator 340 are the same, the system for carbon dioxide capture is continuously maintained. Accordingly, the valve 335 (including a by-pass valve when necessary) may be adjusted so that the same amount of the basic alkaline mixture as a value of a flow meter installed on a line from the absorption tower 310 to the separator 340 is supplied to the absorption tower 310, thereby making a net flow 0.

The carbon dioxide capture unit 311 of the absorption tower 310 collects the reactant containing the carbon dioxide captured by reacting the basic alkaline mixture and the carbon dioxide. The carbon dioxide reactant and the waste solution in the reactant are moved to the separator 340 through a valve 314 to separate the carbon dioxide reactant and the waste solution from the reactant. For example, the separator 340 may perform separation using a centrifugal separation method.

The separated carbon dioxide reactant contains sodium carbonate (Na₂CO₃) or sodium bicarbonate (NaHCO₃), which are useful carbon resources, and is moved to the carbon resource reservoir 500. The moved carbon dioxide reactant is supplied to the hydrogen generator 400, which will be described later.

Additionally, the carbon dioxide reactant is a compound that can be utilized in various industrial fields such as soap, detergent, leather, and food additives, so it has high added value and great commercial potential.

The reactor 300 is a system used on land, so it is easy to secure a place to store the carbon dioxide reactant. Therefore, the carbon dioxide reactant is separately stored in the carbon resource reservoir 500 in order to recycle it into other useful materials.

As shown in <Reaction Equation 2> below, the carbon dioxide reactant may be produced by reacting a basic alkaline mixture and carbon dioxide.

<Reaction Equation 2> 2NaOH + CO₂ → Na₂CO₃ + H₂O Na₂CO₃ + H₂O + CO₂ → 2NaHCO₃

The waste solution excluding the carbon dioxide reactant from the reactants is transferred to a wastewater treatment tank 342 and discarded. For example, the waste solution may contain illite minerals and water contained in the basic alkaline mixture that has finished acting as a catalyst.

After capturing the carbon dioxide in the carbon dioxide capture unit 311, residual carbon dioxide that remains after the carbon dioxide has been removed is discharged through the discharge unit 350. For example, the residual carbon dioxide discharged through the discharge unit 350 may contain a small amount of uncaptured carbon dioxide.

At this time, since a concentration of the residual carbon dioxide cannot exceed a regulatory standard when discharged, residual carbon dioxide that does not exceed a standard (a standard set by a manager after measuring a carbon dioxide concentration in the atmosphere in advance) is discharged based on a carbon dioxide concentration in the atmosphere where the residual carbon dioxide is to be discharged.

The reactor 300 may further include a monitoring unit 360 that monitors the water level and pH of the basic alkaline mixture in the absorption tower; and a control unit 361 that adjusts the supply amount of the basic alkaline mixture by the monitoring unit 360.

The monitoring unit 360 manages values of a gas meter, the pH meter, and the flow meter measured in all processes of the reactor 300, and the control unit 361 is controlled based on the values indicated by the monitoring unit 360. The valves 314, 333, 334, and 335 may be adjusted by percentage based on the values input from the control unit 361.

As described above, the reactor 300 according to the embodiment of the present disclosure captures the carbon dioxide generated in the hydrocarbon reformer 200, thereby reducing carbon dioxide emissions, which may significantly contribute to global warming, and converts the captured carbon dioxide into sodium carbonate or sodium bicarbonate, thereby enabling recycling of carbon dioxide into other useful materials.

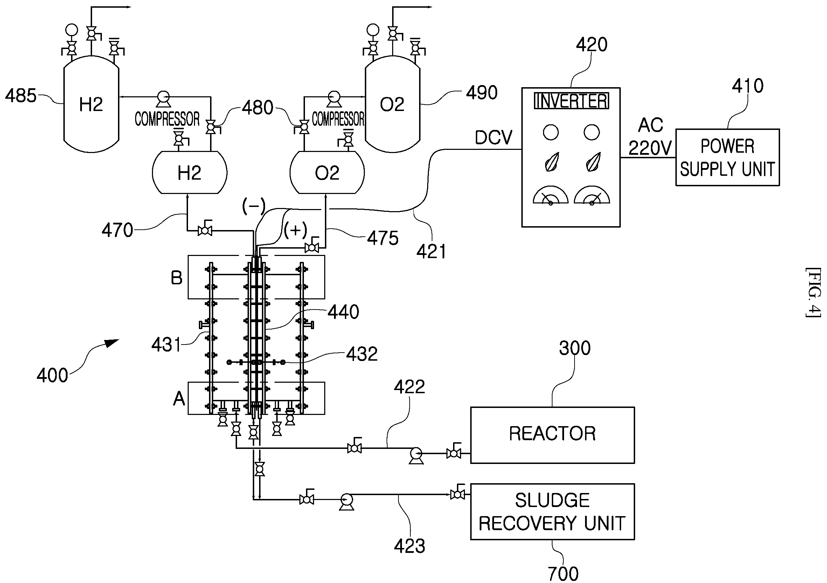

Meanwhile, referring to FIGS. 1 and 4, the hydrogen generator 400 receives the carbon dioxide reactant separated from the reactor 300, generates hydrogen (second hydrogen; green hydrogen) using the carbon dioxide reactant, and supplies the generated hydrogen to the on-site hydrogen charging station 600. Thereby, it is possible to significantly improve hydrocarbon reforming efficiency compared to conventional technologies and to contribute to reducing greenhouse gas emissions by maximizing use of carbon dioxide.

Hereinafter, the hydrogen generator 400 will be described in detail with reference to FIGS. 4 to 6.

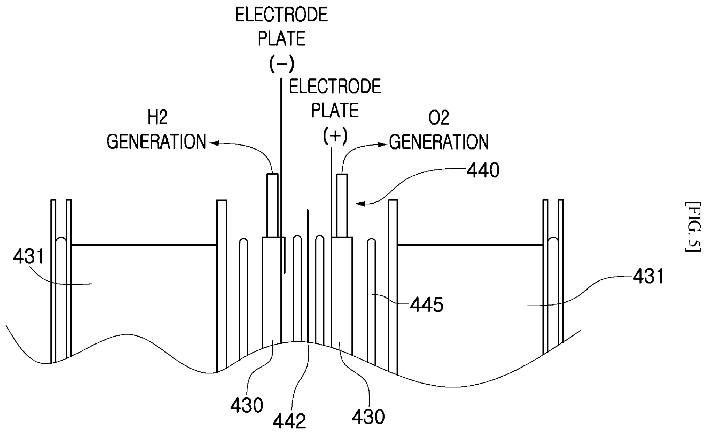

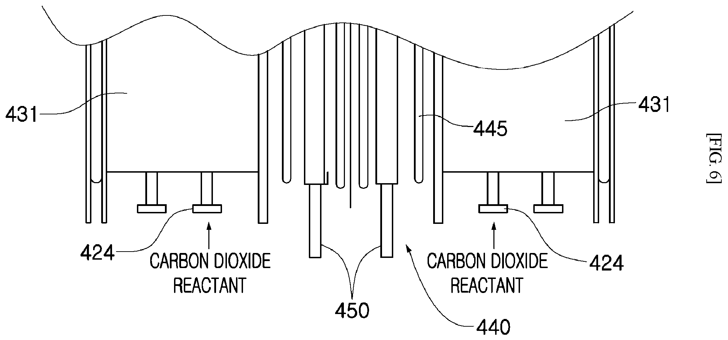

FIG. 4 is a conceptual diagram illustrating a hydrogen generator 400 according to an embodiment of the present disclosure. FIG. 5 is an enlarged view of part B of FIG. 4. FIG. 6 is an enlarged view of part A of FIG. 4.

As illustrated in FIGS. 4 to 6, the hydrogen generator 400 may include: a carbon dioxide reactant supply tank 431 that supplies sodium carbonate (Na₂CO₃) or sodium bicarbonate (NaHCO₃), which is a carbon dioxide reactant separated from the reactor (300 in FIG. 1); a water electrolysis cell 440 that uses the sodium carbonate (Na₂CO₃) or sodium bicarbonate (NaHCO₃) supplied from the carbon dioxide reactant supply tank 431 as an electrolyte for electrolysis to form hydrogen gas (second hydrogen; green hydrogen) and oxygen gas through electrolysis; a power supply unit 410 that applies current to the water electrolysis cell 440; and an inverter 420.

The carbon dioxide reactant supply tank 431 receives the sodium carbonate (Na₂CO₃) or sodium bicarbonate (NaHCO₃), which is the carbon dioxide reactant separated from the reactor 300, through a carbon dioxide reactant introduction flow path 422 and stores it as an electrolyte, and may include a carbon dioxide reactant inlet port 424 connected to an electrolyte supply flow path 432 that supplies the carbon dioxide reactant stored in the carbon dioxide reactant supply tank 431 to the water electrolysis cell 440. The carbon dioxide reactant supply tank 431 may be provided with a pump for pumping the sodium carbonate (Na₂CO₃) or sodium bicarbonate (NaHCO₃), which is the electrolyte for electrolysis of the hydrogen generator 400.

As illustrated in FIGS. 5 and 6, the water electrolysis cell 440 may include a cathode (-) electrode plate and an anode (+) electrode plate, a diaphragm 442 which is an electrolyte membrane disposed between the electrode plates, a pair of separated electrolyzers 430 that receive the carbon dioxide reactant supplied from the carbon dioxide reactant supply tank 431 and are connected to a hydrogen storage tank 485 and an oxygen storage tank 490, a gas discharge unit that discharges second hydrogen gas (green hydrogen) and oxygen gas generated by electrolyzing the carbon dioxide reactant of the electrolyzers 430, and a drain 450 that discharges ionic substances that have not reacted by electrolysis.

Preferably, the water electrolysis cell may further include a packing 445 made of a non-conductor to prevent the carbon dioxide reactant stored in the carbon dioxide reactant supply tank 431 from coming into contact with the electrode plates, and a control unit (not illustrated) that selectively controls whether to open or close the carbon dioxide reactant introduction flow path 422 in response to applied power from the power supply unit 410.

As shown in <Reaction Equation 3> below, the water electrolysis cell 440 may generate hydrogen (H₂) gas (second hydrogen; green hydrogen) and oxygen (O₂) gas as the two electrode plates are energized through a DC bus 421 in response to application of power from the power supply unit 410 and the inverter 420 in a state in which the sodium carbonate (Na₂CO₃) or sodium bicarbonate (NaHCO₃), which is the electrolyte of the present disclosure, is supplied.

<Reaction Equation 3> Reduction electrode (cathode) reaction: Na₂CO₃ + CO₂ + 2H₂O + 2e- → 2NaOH + 2CO₂ + 2OH- + H₂ 2NaHCO₃ + 2e- → 2NaOH + 2CO₂ + 2OH- + H₂ Oxidation electrode (anode) reaction: Na₂CO₃ + CO₂ + H₂O - 2e- → 2NaOH + 2CO₂ + 2H+ + O₂ 2NaHCO₃ - 2e- → 2NaOH + 2CO₂ + 2H+ + O₂

That is, the sodium carbonate (Na₂CO₃) or sodium bicarbonate (NaHCO₃), which is the electrolyte supplied to the water electrolysis cell 440, dissociates on the surface of the cathode electrode plate and releases hydrogen gas (second hydrogen; green hydrogen). As oxygen ions migrate through the diaphragm, which is the electrolyte membrane, and release electrons, oxygen gas is released at the anode electrode plate. Here, in <Reaction Equation 3> above, ionic substances that have not reacted is transferred to a sludge recovery unit 700 of the hydrogen generator 400 through the drain 450.

Through the above-described process, the hydrogen gas (second hydrogen; green hydrogen) discharged from the water electrolysis cell 440 is discharged through a hydrogen discharge flow path 470, passed through a filter and a compressor, and stored as high-purity hydrogen gas in the hydrogen storage tank 485. The stored hydrogen gas is transferred to the on-site hydrogen charging station (600 in FIG. 1) to be used again for charging hydrogen electric vehicles.

Similarly, the oxygen gas discharged from the water electrolysis cell 440 is discharged through an oxygen discharge flow path 475, passed through a filter and compressor, and stored as high-purity oxygen gas in the oxygen storage tank 490.

Meanwhile, at a cathode in a conventional water electrolysis system that uses water as an electrolyte, OH-radicals are generated as reactants during a reduction process. However, the OH-radicals are highly likely to recombine with oxygen (O₂) generated through oxidation at an anode and hydrogen (H₂) generated through reduction at the cathode, thereby generating water (H₂O). This results in a problem of deteriorating efficiency of hydrogen (H₂) generation.

However, since the present disclosure uses sodium carbonate (Na₂CO₃) or sodium bicarbonate (NaHCO₃), which is a carbon dioxide reactant, as an electrolyte for electrolysis, it is possible to prevent recombination of decomposed OH-radicals with hydrogen (H₂) and oxygen (O₂), which is the problem in the reaction of conventional electrolysis technology, through the sodium carbonate (Na₂CO₃) or sodium bicarbonate (NaHCO₃), which is the carbon dioxide reactant, thereby increasing efficiency of hydrogen (H₂) generation.

Additionally, in the present disclosure, since Na+ ions are dissociated through the water electrolysis reaction, an amount of hydrogen (H₂) gas produced is also increased due to an increase in electrical conductivity. Therefore, there is an effect of solving the problem of the related art.

Hereinafter, the carbon resource reservoir according to the embodiment of the present disclosure will be described in more detail with reference to the accompanying drawings.

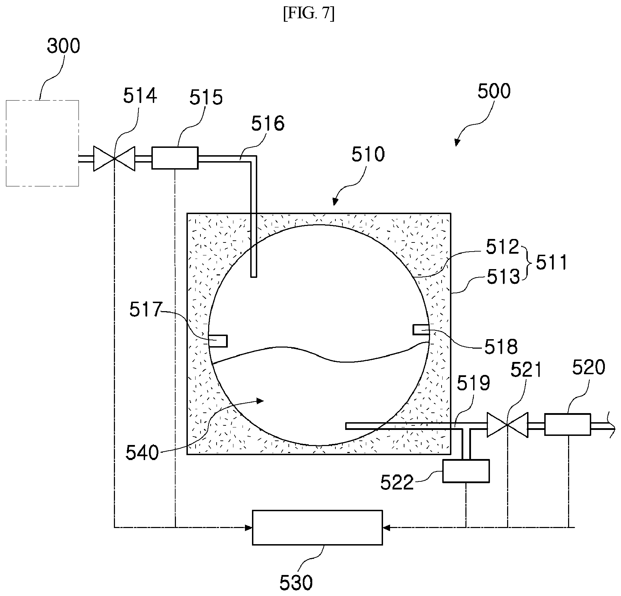

Referring to FIG. 7, a carbon resource storage 500 according to a first embodiment of the present disclosure is a system that stores a carbon dioxide capture reactant in any environment regardless of environmental conditions such as on land, in the ground, or at sea.

Preferably, the carbon resource reservoir 500 is a carbon dioxide capture reactant storage system suitable for the terrestrial environment, and may include: a reactor 300 that receives carbon dioxide generated from a hydrocarbon reformer 200 and reacts it with a basic alkaline mixture to capture the carbon dioxide and convert it into a carbon resource; a storage tank 510 that receives and stores a carbon dioxide reactant converted into the carbon resource from the reactor 300; an inlet unit 514, 515, 516 and an outlet unit 519, 520, 521, 522 connected to the storage tank 510; and a control unit 530 that controls the inlet unit or the outlet unit.

The reactor 300 receives the carbon dioxide generated from the hydrocarbon reformer 200, reacts the carbon dioxide with the basic alkaline mixture to capture the carbon dioxide, collects a reactant containing the captured carbon dioxide, and separates a carbon dioxide reactant and a waste solution from the reactant.

The storage tank 510 has a tank body 511 formed of a double-wall structure by an inner wall 512 and an outer wall 513, and an insulating material is formed between the inner wall 512 and the outer wall 513. Thereby, a heat transfer rate transferred to the inside or outside of the storage tank 510 can be minimized, thereby improving heat retention and insulation function, and the carbon dioxide reactant in a liquid or gel state can be received from the reactor 300 and stored for a long period of time without being sensitive to temperature changes. The carbon dioxide reactant is a bicarbonate in a liquid or gel state, and is maintained for a long period of time without changing its state at room temperature where insulation is maintained.

The storage tank 510 is a tank having a sealed and insulating wall so as to store the bicarbonate in a liquid or gel state, and may have a spherical or angular shape. In the case of a conventional storage tank, pressure inside the tank is very high (at least 5 atm) due to storing liquid carbon dioxide, so the storage tank generally has a spherical shape to secure rigidity of the tank. However, since the storage tank 510 according to the first embodiment of the present disclosure stores the bicarbonate in a liquid or gel state at room temperature, it may have various shapes such as spherical or angular.

The inner wall 512 of the storage tank 510 may include a level sensor 517 that measures a water level of the carbon dioxide reactant loaded into the storage tank 510 and inputs a sensing value to the control unit 530, and a pressure sensor 518 that measures a pressure inside the storage tank 510 and inputs a sensing value to the control unit 530.

The inlet unit is a configuration that is connected to the storage tank 510 to load the carbon dioxide reactant into the storage tank 510, and may include an inlet valve 514, an inlet flow sensor 515, and an inlet line 516.

The inlet valve 514 serves to control a flow rate of the bicarbonate in a liquid or gel state loaded into the storage tank 510. Additionally, the inlet valve 514 is opened or closed by the control unit 530 based on the sensing value for the water level of the carbon dioxide reactant measured by the level sensor 517, thereby controlling the flow rate of the bicarbonate loaded into the storage tank 510.

The inlet flow sensor 515 measures the flow rate of the bicarbonate in a liquid or gel state loaded into the storage tank 510 through the inlet valve 514 to generate an inlet flow rate value, and transmits the generated inlet flow rate value to the control unit 530.

The inlet line 516 may include piping such as a pipe for transporting the bicarbonate in a liquid or gel state, and may be connected to the inside of the storage tank 510. The inlet line 516 may have an end extending into the storage tank 510.

Meanwhile, the outlet unit is a configuration that is connected to the storage tank 510 to unload the bicarbonate in a liquid or gel state stored in the storage tank 510, and may include an outlet line 519, an outlet pump 520, an outlet valve 521, and a vacuum pump 522.

The outlet line 519 may include piping such as a pipe for unloading the bicarbonate in a liquid or gel state stored inside the storage tank 510 to the outside, and may be connected to the inside of the storage tank 510. The outlet line 519 may have an end extending into the storage tank 510.

The outlet pump 520 is provided on the outlet line 519 to provide power to forcibly unload the bicarbonate contained in the storage tank 510 to the outside.

The outlet valve 521 opens or closes a flow path toward the outlet pump 520 for the carbon dioxide reactant stored in the storage tank 510 in response to control operation of the control unit 530. That is, the outlet valve 521 allows or blocks the carbon dioxide reactant from being unloaded to the outside.

The vacuum pump 522 is connected to the outlet line 519 between the storage tank 510 and the outlet valve 521, and discharges air inside the storage tank 510 to the outside in response to control operation of the control unit 530 to maintain the inside of the storage tank 510 in a vacuum state.

The control unit 530 is connected to the level sensor 517, the pressure sensor 518, the inlet unit 514, 515, 516, and the discharge unit 519, 520, 521, 522 to control operation of each configuration. Additionally, the control unit 530 controls the inlet unit 514, 515, 516 when loading the carbon dioxide reactant, which is a liquid or gel-state bicarbonate, into the storage tank 510, or controls the outlet unit 519, 520, 521, 522 when unloading the carbon dioxide reactant from the storage tank 510 to the outside.

According to the first embodiment of the present disclosure, when the sensing value of the level sensor 517 installed on the inner wall 512 of the storage tank 510 falls to equal to or less than a preset value, the control unit 530 determines that the carbon dioxide reactant stored in the storage tank 510 is less than a preset target water level value, and based on the determination result, controls the inlet valve 514 to be opened so that the carbon dioxide reactant is continuously loaded into the storage tank 510 through the inlet line 516.

Meanwhile, when the sensing value of the level sensor 517 reaches the preset target water level value or the flow rate value measured by the inlet flow sensor 515 reaches a preset target flow rate value, the control unit 530 determines that the carbon dioxide reactant stored in the storage tank 510 has been filled to a target amount, and based on the determination result, controls the inlet valve 514 to be closed so that the flow path flowing into the storage tank 510 is blocked to stop loading of the bicarbonate, which is the carbon dioxide reactant, into the storage tank 510.

Additionally, when the control unit 530 receives a discharge signal of the carbon dioxide reactant stored in the storage tank 510 from a manager terminal (not illustrated) that manages the carbon dioxide capture reactant storage system, the control unit 530 controls the outlet valve 521 and the outlet pump 520 to open the outlet valve 521 and operate the outlet pump 520 so that the carbon dioxide reactant stored in the storage tank 510 is unloaded to the outside.

Additionally, when the flow path of the carbon dioxide reactant loaded to the inside of the storage tank 510 is opened or closed according to flow path opening and closing operation of the inlet valve 514, the inside of the storage tank 510 is in a vacuum-released state. Therefore, the control unit 530 operates the vacuum pump 522 so that the sensing value of the pressure sensor 518 that measures the pressure inside the storage tank 510 and inputs the sensing value to the control unit 530 becomes a target vacuum pressure value.

Similarly, when the flow path of the carbon dioxide reactant unloaded to the outside of the storage tank 510 is opened or closed according to flow path opening and closing operation of the outlet valve 521, the inside of the storage tank 510 is in a vacuum-released state. Therefore, the control unit 530 operates the vacuum pump 522 so that the sensing value of the pressure sensor 518 that measures the pressure inside the storage tank 510 and inputs the sensing value to the control unit 530 becomes a target vacuum pressure value.

That is, the inside of the storage tank 510 is maintained under vacuum by the vacuum pump 522. Accordingly, even when the inlet valve 514 and the outlet valve 521 are opened or closed, the vacuum inside the storage tank 510 is maintained. Thereby, the bicarbonate, which is the carbon dioxide reactant, stored in the storage tank 510 can be stored in a vacuum state for a long period of time without changing its state.

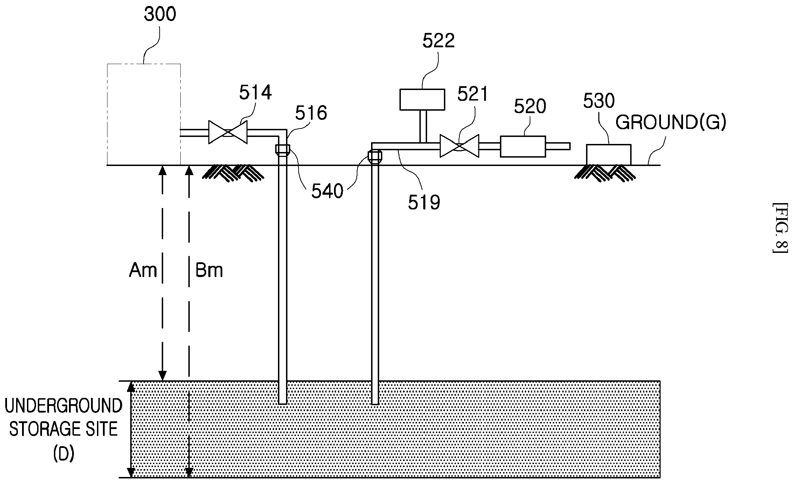

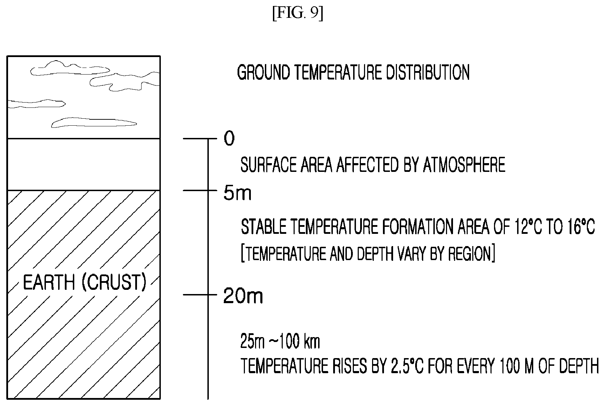

FIG. 8 is a view illustrating a carbon dioxide reservoir according to a second embodiment of the present disclosure. FIG. 9 is a view illustrating general underground temperature distribution according to depth from the ground.

First, referring to FIG. 8, the carbon resource reservoir 500 according to the second embodiment of the present disclosure is a carbon dioxide capture reactant storage system suitable for the underground environment, and may include: a reactor 300 that receives carbon dioxide generated from a hydrocarbon reformer 200 and reacts it with a basic alkaline mixture to capture the carbon dioxide and convert it into a carbon resource; an underground storage site D that receives and stores a carbon dioxide reactant converted into the carbon resource from the reactor 300; an inlet unit 514, 516 and an outlet unit 519, 520, 521, 522 connected at an end thereof to the underground storage site D; and a filter 540 that filters out impurities other than the carbon dioxide reactant when loading/unloading the carbon dioxide reactant.

The reactor 300 receives the carbon dioxide generated from the hydrocarbon reformer 200, reacts the carbon dioxide with the basic alkaline mixture to capture the carbon dioxide, collects a reactant containing the captured carbon dioxide, and separates a carbon dioxide reactant and a waste solution from the reactant.

The underground storage site D is a place that receives the carbon dioxide reactant separated from the reactor 300 and may be excavated from a natural terrain. Here, the carbon dioxide reactant includes bicarbonate in a liquid or gel state.

As illustrated in FIG. 8, the underground storage site D may be formed, for example, at a depth of 5 to 20 m underground from land so as not to be affected by external temperature. Additionally, the underground storage site D formed at a depth of 5 to 20 m underground from land has a stable temperature of 12°C to 16°C, and may be formed in a natural environment without external shielding.

Additionally, the underground storage site D is formed at a depth of Am, but may be formed at a depth lower than Bm from the ground, and may also be formed at different depths where a stable room temperature of 12°C to 16°C is formed depending on regions. This is to prevent the carbon dioxide reactant, which is bicarbonate, from changing its state at temperatures exceeding 50 degrees Celsius (°C), and to store the carbon dioxide reactant in the form of bicarbonate in a liquid or gel state over a wide area for a long period of time.

The inlet unit is connected to the underground storage site D and serves to load the carbon dioxide reactant separated from the reactor 300 into the underground storage site D, and may include: an inlet valve 514 that opens and closes a flow path for the carbon dioxide reactant loaded into the underground storage site D to control a flow rate of the loaded carbon dioxide reactant; and an inlet line 516 connected to the underground storage site D to load the carbon dioxide reactant. Through the configuration of the inlet unit, the bicarbonate a liquid or gel-state, which is the carbon dioxide reactant separated from the reactor 300, can be stored in the underground storage site D.

The outlet unit serves to unload the carbon dioxide reactant inside the underground storage site D, and may include: an outlet line 519 connected to the underground storage site D to unload the carbon dioxide reactant to the outside of the underground storage site D; an outlet pump 520 provided on the outlet line 519 to forcibly unload the carbon dioxide reactant stored in the underground storage site D to the outside; an outlet valve 521 that opens and closes a flow path toward the outlet pump 520 for the carbon dioxide reactant stored in the underground storage site D; and a vacuum pump 522 connected to the outlet line 519 between the underground storage site D and the outlet valve 521 to discharge air inside the underground storage site D to the outside to form a vacuum therein. Through the configuration of the outlet unit, the carbon dioxide reactant can be stably stored in the underground storage site, and the stored carbon dioxide reactant can be obtained and used later when necessary.

The control unit 530 controls the inlet unit 514, 516 and the outlet unit 519, 520, 521, 522 when loading the carbon dioxide reactant accommodated in the underground storage site D into the underground storage site D or unloading the carbon dioxide reactant from the underground storage site D to the outside, thereby allowing the carbon dioxide reactant with an appropriate flow rate to be stored in the underground storage site D or the carbon dioxide reactant previously stored in the underground storage site D to be discharged to the outside when necessary.

The filter 540 may be disposed within a path of each of the inlet line 516 or the outlet line 519. The filter includes pores having a diameter of 10 to 20 µm and formed in a size that allows the carbon dioxide reactant to pass therethrough, and filters out impurities other than the carbon dioxide reactant when loading/unloading the carbon dioxide reactant.

Accordingly, the filter 540 functions to filter out impurities other than the carbon dioxide reactant when loading the carbon dioxide reactant introduced from the reactor 300 into the underground storage site D or unloading the carbon dioxide reactant from the underground storage site D to the outside, thereby enabling the carbon dioxide reactant to be stored in the underground storage site D without being mixed with any impurities, or only the carbon dioxide reactant to be obtained without any impurities when unloading the carbon dioxide reactant previously stored in the underground storage site D to the outside.

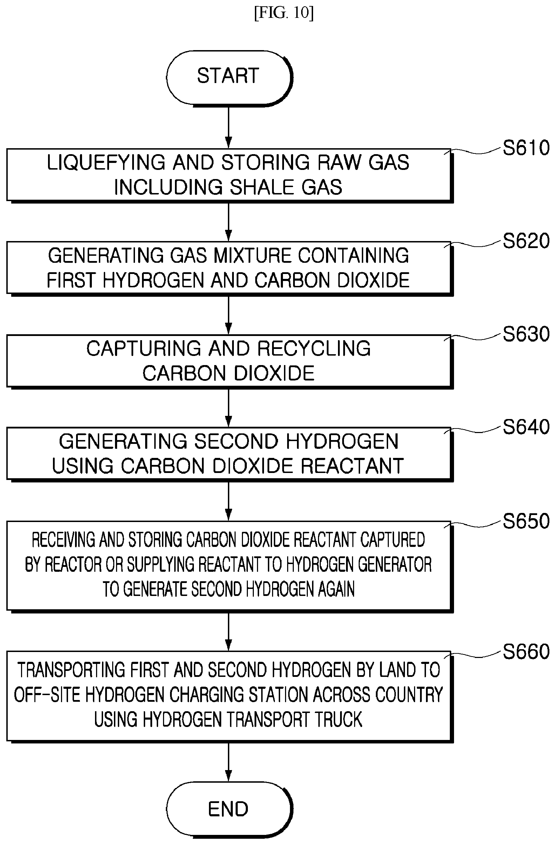

FIG. 10 is a flowchart illustrating a method of operating the clean energy convergence center using blue and green hydrogen according to an embodiment of the present disclosure.

Referring to FIG. 10, the method of operating the clean energy convergence center using blue and green hydrogen according to the embodiment of the present disclosure may include the following steps: Step A in which a natural gas reservoir 100 liquefies and stores raw gas including shale gas (S610); Step B in which a hydrocarbon reformer 200 generates a gas mixture containing first hydrogen (blue hydrogen) and carbon dioxide by reacting the raw gas stored in the natural gas reservoir 100 with water injected from the outside in the Step A, separates the first hydrogen from the gas mixture, and delivers the first hydrogen to an on-site hydrogen charging station 600 through a first transport pipe P1 (S620); Step C in which a reactor 300 receives the carbon dioxide generated in the Step B from the hydrocarbon reformer 200, reacts the carbon dioxide with a basic alkaline mixture to capture the carbon dioxide, and collects a reactant containing the captured carbon dioxide (S630); Step D in which a hydrogen generator 400 generates second hydrogen (green hydrogen) using the reactant containing the carbon dioxide captured by the reactor 300 and delivers the second hydrogen to the on-site hydrogen charging station 600 through a second transport pipe P2 (S640); Step E in which a carbon resource reservoir 500 receives and stores the reactant containing the carbon dioxide captured by the reactor 300 or supplies the reactant to the hydrogen generator 400 to generate second hydrogen (green hydrogen) and delivers the second hydrogen to the on-site hydrogen charging station 600 through the second transport pipe P2 (S650); and Step F in which the first hydrogen (blue hydrogen) and the second hydrogen (green hydrogen) delivered to the on-site hydrogen charging station 600 in the Step D (S640) or Step E (S650) are transported by land to an off-site hydrogen charging station 800 distributed at each regional base of a country using a hydrogen transport truck (HET) equipped with a hydrogen storage tank (not illustrated) of a predetermined capacity (S660).

At this time, as described above with reference to FIGS. 1 and 2, the on-site hydrogen charging station 600 or the off-site hydrogen charging station 800 may be further provided with a fuel cell 900 that generates electric energy using the generated first hydrogen (blue hydrogen) and second hydrogen (green hydrogen) and an energy storage system (ESS) 1000 that stores the electric energy generated from the fuel cell 900.

Accordingly, the on-site hydrogen charging station 600 and the off-site hydrogen charging station 800 directly charge an electric vehicle (EV) using the electric energy produced by the fuel cell 900 or indirectly charge the electric vehicle (EV) using the electric energy stored in the ESS 1000. Additionally, hydrogen is charged to a hydrogen vehicle (HV) or a hydrogen electric vehicle (HEV) through the first or second hydrogen (blue hydrogen or green hydrogen) stored in the on-site hydrogen charging station 600 and the off-site hydrogen charging station 800.

Therefore, as described above, the on-site hydrogen charging station 600 and the off-site hydrogen charging station 800 according to the present disclosure may be installed at regional bases throughout a country and have an advantage of being able to charge and support all types of eco-friendly vehicles (EV, HV, HEV).

Specifically, in the Step A (S610), the natural gas reservoir liquefies and stores the raw gas including shale gas. The raw gas (natural gas) required for producing the first hydrogen of the present disclosure, i.e. blue hydrogen gas, may be shale gas, for example.

In the Step B (S620), specifically, the hydrocarbon reformer 200 reacts the raw gas stored in the natural gas reservoir 100 in the Step A (S610) with the water supplied from the outside to generate a gas mixture containing hydrogen and carbon dioxide, extracts the hydrogen from the gas mixture, delivers the hydrogen to the on-site hydrogen charging station 600, and supplies the carbon dioxide separated from the hydrogen in the generated gas mixture to the reactor 300.

At this time, the first hydrogen generated from the hydrocarbon reformer 200 may be blue hydrogen from which carbon dioxide has been captured and removed. The first hydrogen (blue hydrogen) is transported to the on-site hydrogen charging station 600 by pipeline transport through the first transport pipe P1 and stored.

In the Step C (S630), the reactor 300 receives the carbon dioxide generated in the Step B (S620), reacts the carbon dioxide with the basic alkaline mixture to capture the carbon dioxide, collects the reactant containing the captured carbon dioxide, and separates a carbon dioxide reactant and a waste solution from the reactant. Here, the carbon dioxide reactant may include sodium carbonate (Na₂CO₃) or sodium bicarbonate (NaHCO₃).

Additionally, the Step C (S630) may include a step in which when a water level of the basic alkaline mixture inside the reactor 300 falls to less than 90%, the basic alkaline mixture is injected through a valve (335 in FIG. 3) in a mixer (330 in FIG. 3) included in the reactor 300, and when the water level of the basic alkaline mixture reaches 100%, the injection is stopped, and at the same time, a basic alkaline solution and water are mixed until a pH of the basic alkaline mixture becomes 12 to 13.5.

In the Step D (S640), the hydrogen generator 400 generates hydrogen gas and oxygen gas through electrolysis using sodium carbonate (Na₂CO₃) or sodium bicarbonate (NaHCO₃), which is the carbon dioxide reactant separated in the Step C (S630), as an electrolyte. Here, the generated hydrogen gas may be green hydrogen that does not release carbon dioxide. The second hydrogen (green hydrogen) is transported again to the on-site hydrogen charging station 600 by pipeline transport through the second transport pipe P2 and stored. Meanwhile, since the configuration and function of the hydrogen generator 400 have been described above with reference to FIGS. 4 to 6, a description thereof will be omitted in the present embodiment.

In the Step E (S650), the carbon resource reservoir 500 receives and stores the reactant containing the carbon dioxide captured by the reactor 300 or supplies the reactant to the hydrogen generator 400 to generate second hydrogen (green hydrogen) and then delivers the second hydrogen to the on-site hydrogen charging station 600 through the second transport pipe P2.

In the Step F (S660), the first hydrogen (blue hydrogen) and the second hydrogen (green hydrogen) delivered to the on-site hydrogen charging station in the Step D (S640) or the Step E (S650) are transported by land to the off-site hydrogen charging station distributed in each regional base across a country using a hydrogen transport truck (HET) equipped with a hydrogen storage tank of a predetermined capacity.

Embodiments of the present disclosure have been described with reference to the accompanying drawings. Specific terms or words used in the description should be construed in accordance with the spirit of the present disclosure without limiting the subject matter thereof. It will be apparent to those skilled in the art that various changes and modifications of the embodiments described herein can be made without departing from the scope and spirit of the present disclosure.

### Industrial Applicability

The present disclosure can find wide application in the field of clean energy convergence centers using blue and green hydrogen.

## Claims

1. A clean energy convergence center using blue and green hydrogen, the clean energy convergence center comprising:
a clean hydrogen production base that produces blue and green hydrogen through capturing, storing, and recycling carbon dioxide generated during methane reforming; and
at least one clean hydrogen node that receives the blue and green hydrogen produced from the clean hydrogen production base,
wherein multiple clean hydrogen nodes are distributed throughout a country in consideration of factors including an area and population of each region of the country and a distance to the clean hydrogen production base,
the clean hydrogen production base and the clean hydrogen nodes are connected to each other, and
infrastructure including logistics, rest facilities, offices, and restaurants is expanded around each of the distributed clean hydrogen nodes.

2. The clean energy convergence center of claim 1, wherein the clean hydrogen production base comprises:
a natural gas reservoir that stores liquefied natural gas (LNG) including shale gas;
a hydrocarbon reformer that generates a gas mixture containing first hydrogen (blue hydrogen) and carbon dioxide by reacting the natural gas or shale gas supplied from the natural gas reservoir with water supplied from outside;
an on-site hydrogen charging station that receives and stores the first hydrogen generated from the hydrocarbon reformer;
a reactor that receives the carbon dioxide generated from the hydrocarbon reformer, reacts the carbon dioxide with a basic alkaline mixture to capture the carbon dioxide, collects a reactant containing the captured carbon dioxide, and separates a carbon dioxide reactant and a waste solution from the reactant;
a carbon resource reservoir that stores the carbon dioxide reactant separated from the reactor; and
a hydrogen generator that generates second hydrogen (green hydrogen) by directly receiving the carbon dioxide reactant separated from the reactor or using the carbon dioxide reactant delivered via the carbon resource reservoir and delivers the generated second hydrogen to the on-site hydrogen charging station.

3. The clean energy convergence center of claim 2, wherein the clean hydrogen node comprises:
an off-site hydrogen charging station that receives and stores the first and second hydrogen from the on-site hydrogen charging station.

4. The clean energy convergence center of claim 2, wherein the gas mixture containing the first hydrogen and the carbon dioxide is generated by reacting raw gas stored in the natural gas reservoir with the water supplied from outside, the first hydrogen is separated from the gas mixture, and the first hydrogen is delivered to the on-site hydrogen charging station through a first transport pipe.

5. The clean energy convergence center of claim 2, wherein the carbon resource reservoir receives and stores the reactant containing the carbon dioxide captured by the reactor or supplies the reactant to the hydrogen generator to generate second hydrogen and then delivers the second hydrogen to the on-site hydrogen charging station through a second transport pipe.

6. The clean energy convergence center of claim 2, wherein the first and second hydrogen delivered to the on-site hydrogen charging station are transported by land to the clean hydrogen node using a hydrogen transport truck equipped with a hydrogen storage tank of a predetermined capacity or transported through a transport pipeline.

7. The clean energy convergence center of claim **1,** wherein the clean hydrogen production base or the clean hydrogen node further comprises:
a fuel cell that generates electricity using the generated blue and green hydrogen; and an energy storage system (ESS) that stores the electricity generated from the fuel cell.

8. The clean energy convergence center of claim 6, wherein the hydrogen transport truck is a hydrogen electric vehicle that runs on land by generating electricity from a fuel cell inside the vehicle using the first or second hydrogen charged from the on-site hydrogen charging station.

9. The clean energy convergence center of claim 2, wherein the hydrocarbon reformer comprises:
an extraction means that extracts or separates the hydrogen and the carbon dioxide from the gas mixture; and
a delivery means that supplies the hydrogen extracted from the extraction means to the on-site hydrogen charging station and supplies the carbon dioxide separated from the hydrogen from the generated gas mixture to the reactor.

10. The clean energy convergence center of claim 2, wherein the reactor comprises:
a mixer that supplies the basic alkaline mixture;
an absorption tower that reacts the basic alkaline mixture supplied from the mixer with the carbon dioxide delivered from the hydrocarbon reformer to capture the carbon dioxide;
a separator that collects the reactant containing the carbon dioxide captured by the absorption tower and separates the carbon dioxide reactant and the waste solution from the reactant; and
a carbon resource reservoir that stores the separated carbon dioxide reactant to be used as a resource.

11. The clean energy convergence center of claim 10, wherein the mixer mixes a basic alkaline solution supplied from a basic alkaline solution storage tank and water supplied from a water source to generate the basic alkaline mixture.

12. The clean energy convergence center of claim 10, wherein the absorption tower supplies the basic alkaline mixture from the mixer through multiple nozzles installed at a top of the absorption tower.

13. The clean energy convergence center of claim 10, wherein the absorption tower allows the carbon dioxide delivered from the hydrocarbon reformer to pass through a bubbler installed at a bottom of the absorption tower to form microbubbles in the carbon dioxide, and reacts the carbon dioxide with the basic alkaline mixture supplied from the mixer to capture the carbon dioxide.

14. The clean energy convergence center of claim 10, wherein the reactor further comprises:
a monitoring unit that monitors a water level and a pH of the basic alkaline mixture in the absorption tower; and
a control unit that controls a supply amount of the basic alkaline mixture by the monitoring unit.

15. The clean energy convergence center of claim 2, wherein the carbon resource reservoir comprises:
a storage tank having a double-wall structure with an inner wall and an outer wall to contain the carbon dioxide reactant separated from the reactor;
an inlet unit connected to the storage tank to load the carbon dioxide reactant into the storage tank;
an outlet unit connected to the storage tank to unload the carbon dioxide reactant in the storage tank; and
a control unit that controls the inlet unit or the outlet unit during loading/unloading of the carbon dioxide reactant.
